# EUROPÄISCHE PATENTSCHRIFT

(11) **EP 1 905 707 B1**
(45) Veröffentlichungstag und Bekanntmachung des Hinweises auf die Patenterteilung: **30.09.2009**
(21) Anmeldenummer: 07113696.4
(22) Anmeldetag: 02.08.2007
(51) Int. Cl.: B65G 17/06, B65G 17/38

(54) **Endlosförderer**
Endless conveyor
Convoyeur sans fin

(30) Priorität: 27.09.2006 DE 102006045694
(43) Veröffentlichungstag der Anmeldung: 02.04.2008
(73) Patentinhaber: SIEMENS AKTIENGESELLSCHAFT, 80333 München (DE)
(72) Erfinder: Helgert, Thomas, 92648, Vohenstrauss (DE)

(56) Entgegenhaltungen:
- EP-A- 0 629 566
- EP-A- 0 869 086
- EP-A- 1 440 921
- WO-A-99/57044
- BE-A- 491 893
- DE-A1- 2 356 067
- FR-A- 1 090 811
- FR-A- 1 295 249
- US-A- 3 643 792

## Beschreibung

Die Erfindung betrifft einen Endlosförderer mit in unterschiedlichen Raumrichtungen gekrümmter Förderstrecke, für Gepäckstücke im Gepäckausgabebereich eines Flughafens, dessen das Fördergut tragende, vorzugsweise sich überlappende Förderelemente über ein Zugglied zu einem endlos umlaufenden Strang miteinander verbunden sind, wobei das Zugglied als die Förderelemente verbindendes Seil, insbesondere Drahtseil ausgebildet ist, an dem die Förderelemente in festgelegten Abständen kurven- und höhengängig befestigt sind.

Förderer der eingangs genannten Art, wie z. B. aus BE 491 893 bekannt, finden insbesondere in Gepäcksortierbereichen und an Gepäckausgaben von Flughäfen ihre Verwendung. Dort können Fluggäste nach der Ladung ihr Gepäck abholen, das dort auf dem Förderer zur Verfügung gestellt wird. Auch im Check-In-Bereich, also dort, wo das Fluggepäck aufgegeben wird, werden gattungsgemäße Förderer eingesetzt. Abhängig von der Gebäudearchitektur und der Größe der Anlage folgt die Förderstrecke häufig verschlungenen Pfaden, so dass Gelenkketten, welche die Antriebskraft übertragen, teilweise um Kurven mit engen Radien herumgeführt werden müssen und teilweise auch wechselnde Steigungen zu überwinden haben. So reicht gelegentlich die Gelenkigkeit einer solchen Gelenkkette nicht aus. Aufgrund der hohen Gewichte des Fördergutes und des Förderers selbst und aufgrund der starken Umlenkungen der Förderstrecke ergeben sich zudem an der Gelenkkette, an der die Förderelemente befestigt sind, beim Umlauf erhebliche Kräfte.

Aus der europäischen Patentanmeldung EP 0 629 566 A2 ist bereits ein Förderer, bekannt geworden, dessen Gliederkette jedoch eine für viele Anwendungen nur unzureichende räumliche Flexibilität aufweist. Ein anderer Förderer der eingangs genannten Art ist aus der europäischen Patentschrift EP 0 869 086 B1 bekannt, bei der die Gelenkkette Gelenke mit abwechselnd aufeinander folgenden, jeweils senkrecht zueinander angeordneten Drehachsen aufweist. Ein Nachteil dieser Anordnung besteht darin, dass die effektive Gliedlänge, also der Abstand zwischen zwei Gelenken der Kette, gemäß dieser Anordnung mit Bezug auf eine bestimmte Krümmungsrichtung verdoppelt wird, weil beispielsweise bei einer Biegung der Gelenkkette in horizontaler Richtung nur jedes zweite Glied zu einer Auslenkung fähig ist und die dazwischen liegenden gleichsam steif bleiben. Dem zur Folge erhöht sich ungünstig die Eckigkeit der polygonalen Erstreckung des Kettenzuges in Kurvenbereichen. Hieraus ergeben sich sehr hohe Belastungen der Gelenke, welche aufgrund der Ausrichtung der Drehachse parallel zur Krümmungsebene gleichsam steif bleibt. Insgesamt kommt es zu einem höheren Verschleiß des Kettentriebes, da der stoßweise Vortrieb aufgrund der Polygonform in den Umlenkungen verhältnismäßig hohe Trumkräfte zur Folge hat. Beide Ketten sind sehr aufwendig und schwer, sie benötigen einen entsprechend großen Bauraum und sind teuer. Die Wartung der Ketten ist schwierig, insbesondere der Ausbau beschädigter Kettenglieder ist zeit- und arbeitsintensiv, so dass die Förderer für längere Zeit dem Betrieb nicht zur Verfügung stehen.

Aufgabe der vorliegenden Erfindung ist es, einen Endlosförderer der eingangs beschriebenen Art, insbesondere zum Transport von Gepäckstücken im Gepäckausgabebereich eines Flughafens so zu verfeinern, dass mit sehr einfachen und funktionssicheren Mitteln eine gekrümmte Förderstrecke durchfahren werden kann, ohne die teueren, schweren und wartungsintensiven Gliederketten des Standes der Technik zur Befestigung der Förderelemente und als Zugglied verwenden zu müssen.

Zur Lösung der Aufgabe ist erfindungsgemäß vorgesehen, dass das Seil in einer unmittelbar oder mittelbar am Boden befestigten Führung gleitgeführt ist und dass die Führung als eine in Umlaufrichtung des Endlosförderers verlaufende, das Seil teilweise umgreifende Rinne ausgebildet ist. Das Seil sowohl der Befestigung als auch der Abstandshaltung der einzelnen Förderelemente dienende Seil, ist in einer unmittelbar oder mittelbar am Boden befestigten Führung gleitgeführt. Diese Gleitführung dient der stabilisierenden Lage des Seiles auch in Kurvenstrecken und stellt sicher, dass die Abstände der Förderelemente auch in Kurven der Förderstrecke erhalten bleiben. Die Gleitführung ist als eine in Umlaufrichtung des Endlosförderers verlaufende, das Seil teilweise umgreifende Rinne ausgebildet und verhindert, dass sich das Seil in der Kurvenstrecke seitlich auslenkt.

Die BE 491 893, US 3 643 792, FR 1 295 249, EP 1 440 921 und WO 99/57044 offenbaren zwar ebenfalls Endlosförderer in unterschiedlichen Ausführungen, bei denen die Förderelemente über Seile miteinander verbunden sind, doch ist die besondere Führung des Seiles bei der vorliegenden Erfindung dort weder verwirklicht, noch nahegelegt.

Erfindungsgemäß sind die Förderelemente mit dem Seil über Mitnehmer verbunden, die derartig raumbeweglich gestaltet sind, dass sie einen Kurven- und/oder Höhenverlauf der Förderstrecke erlauben. Das kann beispielsweise durch eine beschränkte Kugelgelenkigkeit der Mitnehmer zwischen dem Förderelemente und dem Seil ermöglicht werden.

Vorzugsweise sind die Förderelemente, wie bei den gattungsgemäßen Förderern bekannt, plattenförmig ausgebildet und werden mit ihren beiden Außenseiten auf parallel zum Förderweg verlaufenden Führungen abgetragen. Die Führungen verlaufen in Transportrichtung und garantieren den festgelegten Förderweg des Endlosförderers.

In einer günstigen Ausgestaltung wird vorgeschlagen, dass die Förderelemente an den beiden Außenseiten mit in Traversen gehaltenen Rollen versehen sind, die in Transportrichtung auf en Führungen ablaufen. Diese Rollen vermindern sehr vorteilhaft die Reibung der Förderelemente an den Führungen und stabilisieren den Lauf des Endlosförderers durch das Abtragen der Rollen auf den Führungen.

Günstigerweise sind die Führungen als Rohr ausgebildet und die darauf abrollenden Rollen weisen eine mit dem Rohrprofil korrespondierende konkave Lauffläche auf.

Als besonders günstig wird abgesehen, wenn zum Antrieb des Endlosförderers mindestens ein Linearmotor mit statischem Primärteil unterhalb des Förderelementes am Boden oder Rahmen des Endlosförderers angeordnet ist, dessen Sekundärteil auf der Unterseite des Förderelementes befestigt ist.

Der Einsatz eines oder mehrerer Linearmotoren hat zum einen den Vorteil einer sehr verschleißarmen Antriebsart und ist gleichzeitig sehr leise gegenüber den jetzt beim Stand der Technik verwendeten Antriebsketten. In Folge der sehr einfachen Ausbildung des Endlosförderers gestalten sich auch Servicearbeiten einfacher und weniger kostenintensiv, Kettenglieder müssen durch die Verwendung des Seiles nicht mehr gewechselt werden, so dass Stillstandszeiten der Anlage beim notwendigen Wechseln eines Förderelementes auf ein absolutes Minimum reduziert werden.

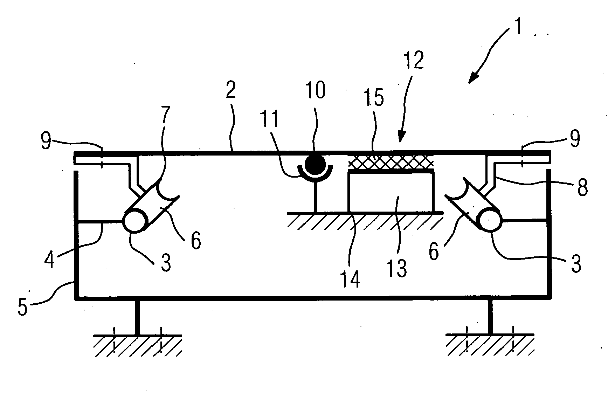

Ein Ausführungsbeispiel der Erfindung ist in der Zeichnung schematisch dargestellt und wird nachfolgend beschrieben.

Die einzige Zeichnungsfigur zeigt in grob schematischer Darstellung einen Querschnitt durch einen erfindungsgemäßen Endlosförderer quer zu seiner Transportrichtung. Der Endlosförderer ist insgesamt mit 1 bezeichnet, er besteht aus einer endlichen Zahl von plattenförmigen Förderelementen 2 zur Aufnahme von (nicht dargestellten) Gepäckstücken an der Gepäckausgabe im Ankunftsbereich eines Flughafens. Die Förderelemente überlappen sich in Transportrichtung in bekannter Weise und bewegen sich auf einer endlosen Bahn angetrieben fort. Die Führung der Förderelemente übernehmen an beiden Außenseiten der Förderelemente vorgesehene Führungen 3, die im Ausführungsbeispiel als Rohre ausgebildet sind. Die Rohre sind am Rahmen 5 des Endlosförderers bei 4 befestigt und verlaufen in und parallel zur Transportrichtung. Auf den Rohren rollen zur Führung der Förderelemente 2 in Transportrichtung die mit 6 bezeichneten Rollen ab, deren Laufflächen, wie bei 7 erkennbar, konkav ausgebildet sind, wodurch die Laufflächen die Rohre 3 teilweise umgreifen. Die Rollen 6 sind an Traversen 8 drehbar gelagert, die ihrerseits an der Unterseite mit dem Förderelement 2 bei 9 fest verbunden sind. Jedes dieser Förderelemente 2 ist mit zwei beidseitig angeordneten Traversen 8 versehen, so dass jedes einzelne Förderelemente 2 auf den aus Rohren gebildeten Führungsbahnen abrollt.

Um die Förderelemente in Transportrichtung zusammenzuhalten und dennoch eine Kurvenfahrt auch in der Höhe zu ermöglichen, verläuft entlang der Transportbahn des Endlosförderers 1 zentral ein Seil 10, vorzugsweise ein Drahtseil, an das die einzelnen Förderelemente angeschlossen sind. Dies geschieht beispielsweise über mit dem Seil 10 verbundene Mitnehmer (nicht dargestellt), die mindestens so weit in bekannter Weise gelenkig ausgebildet sind, dass die Bewegungen der Förderelemente 2 in Kurven- und/oder Steigungsstrecken zugelassen wird. Das Seil 10 ist in einer im Querschnitt schalenförmigen Rinne 11 geführt und folgt dieser zentrisch zwischen den Führungen 3 verlaufenden Rinne dem Verlauf der Förderbahn. Das Seil dient insbesondere der gelenkigen Verbindung der Förderelemente 2 und erlaubt die Einstellung des richtigen Abstandes der einzelnen Förderelemente 2 zueinander.

Der Antrieb des Endlosförderers erfolgt vorzugsweise über einen Linearantrieb 12, dessen Stator 13 am Fundament oder Rahmen des Endlosförderers wie bei 14 symbolisch dargestellt ist. An dieser Stelle kann auch die Rinne 11 für das Drahtseil 10 befestigt sein. Der bewegliche Teil des Linearmotores 15 ist an der Unterseite der Förderelemente 2 befestigt, so dass bei eingeschaltetem Linearmotor 12 die Förderelemente in Transportrichtung fortbewegt werden. Selbstverständlich können auf längeren Förderstrecken auch mehrere Linearmotoren zum Einsatz kommen, um den Endlosförderer voranzutreiben.

## Patentansprüche

1. Endlosförderer mit in unterschiedlichen Raumrichtungen gekrümmter Förderstrecke für Gepäckstücke im Gepäckausgabebereich eines Flughafens, dessen das Fördergut tragende, vorzugsweise sich überlappende Förderelemente über ein Zugglied zu einem endlos umlaufenden Strang miteinander verbunden sind, wobei das Zugglied als die Förderelemente (2) verbindendes Seil (10), insbesondere Drahtseil ausgebildet ist, an dem die Förderelemente (2) in festgelegten Abständen kurven- und höhengängig befestigt sind,
**dadurch gekennzeichnet, dass**
das Seil (10) in einer unmittelbar oder mittelbar am Boden (14) befestigten Führung (11) gleitgeführt ist und dass die Führung (11) als eine in Umlaufrichtung des Endlosförderers (1) verlaufende, das Seil (10) teilweise umgreifende Rinne ausgebildet ist.

2. Endlosförderer nach Anspruch 1,
**dadurch gekennzeichnet, dass**
die Förderelemente (2) mit dem Seil (10) über Mitnehmer verbunden sind, die eine den Kurven- und/oder Höhenverlauf der Förderstrecke erlaubende Raumbeweglichkeit gestatten.

3. Endlosförderer nach Anspruch 1 und 2,
**dadurch gekennzeichnet, dass**
die Förderelemente (2) plattenförmig ausgebildet sind und mit ihren beiden Außenseiten auf parallel zum Förderweg verlaufenden Führungen (3) abgetragen werden.

4. Endlosförderer nach Anspruch 3,
**dadurch gekennzeichnet, dass**
die Förderelemente (2) an den beiden Außenseiten mit in Traversen (8) gehaltenen Rollen (6) versehen sind, die in Transportrichtung auf den Führungen (3) abrollen.

5. Endlosförderer nach Anspruch 3 und 4,
**dadurch gekennzeichnet, dass**
die Führungen (3) als Rohre ausgebildet sind und die darauf abrollenden Rollen (6) eine mit dem Rohrprofil korrespondierende konkave Lauffläche (7) aufweisen.

6. Endlosförderer nach Anspruch 1-5,
**dadurch gekennzeichnet, dass**
zum Antrieb des Endlösförderers (1) mindestens ein Linearmotor (12) mit statischem Primärteil (13) unterhalb des Fördererelementes (2) am Boden oder Rahmen (bei 14) des Endlosförderers (1) angeordnet ist, dessen Sekundärteil (15) auf der Unterseite des Förderelementes (2) befestigt ist.

## Claims

1. Endless conveyor with a conveying path curved in different directions in space for items of baggage in the baggage-reclaim area of an airport, of which the preferably overlapping conveying elements, which carry the items, are connected to one another via a traction means to form an endless circulating strand, the traction means being designed as a cable (10), in particular wire cable, which connects the conveying elements (2) and on which the conveying elements (2) are fastened at defined intervals such that they can negotiate curves and gradients **characterized in that** the cable (10) is guided for sliding action in a guide (11) fastened directly or indirectly on the floor (14), and **in that** the guide (11) is designed as a channel which runs in the direction in which the endless conveyor (1) circulates and partially engages around the cable (10).

2. Endless conveyor according to Claim 1, **characterized in that** the conveying elements (2) are connected to the cable (10) via drivers which provide for movement in space which allows the conveying path to negotiate curves and/or gradients.

3. Endless conveyor according to Claims 1 and 2, **characterized in that** the conveying elements (2) are of platelike design and are borne, by way of their two outer sides, on guides (3) running parallel to the conveying route.

4. Endless conveyor according to Claim 3, **characterized in that** the conveying elements (2) are provided, on the two outer sides, with rollers (6) which are retained in the crossmembers (8) which roll on the guides (3) in the transporting direction.

5. Endless conveyor according to Claims 3 and 4, **characterized in that** the guides (3) are designed as tubes, and the rollers (6) rolling thereon have a concave running surface (7) which corresponds with the tube profile.

6. Endless conveyor according to Claims 1-5, **characterized in that**, in order to drive the endless conveyor (1), at least one linear motor (12) is arranged by way of a static primary part (13), beneath the conveying element (2), on the floor or frame (at 14) of the endless conveyor (1), the secondary part (15) of the linear motor being fastened on the underside of the conveying element (2).

## Revendications

1. Convoyeur sans fin comprenant des sections de convoyage courbées dans des directions différentes de l'espace, pour des bagages dans la zone de livraison des bagages d'un aéroport, dont des éléments de convoyage portant le produit à transporter et, de préférence se chevauchant, sont assemblés entre eux en une bande sans fin tournante par un élément de traction, l'élément de traction étant constitué sous la forme d'un câble ( 10 ), notamment d'un câble à fil métallique, qui relie les éléments ( 2 ) de convoyage et auxquels les éléments ( 2 ) de convoyage sont fixés d'une manière accessible en courbe et en hauteur à des intervalles fixés,
**caractérisé en ce que**,
le câble ( 10 ) est guidé à glissement dans un guidage ( 10 ) fixé directement au sol ( 14 ) et **en ce que** le guidage ( 11 ) est constitué sous la forme d'une goulotte s'étendant dans la direction de circulation du convoyeur ( 1 ) sans fin et entourant en partie le câble ( 10 ).

2. Convoyeur sans fin suivant la revendication 1,
**caractérisé en ce que**,
les éléments ( 2 ) de convoyage sont assemblés au câble ( 10 ) par des entraîneurs qui autorisent une mobilité dans l'espace, autorisant un tracé en courbe et/ou en hauteur des sections du convoyeur.

3. Convoyeur sans fin suivant la revendication 1 et 2,
**caractérisé en ce que**,
les éléments ( 2 ) de convoyage sont constitués sous la forme de plaques et sont portés par leur deux faces extérieures sur des guidages ( 3 ) s'étendant parallèlement à la voie de convoyage.

4. Convoyeur sans fin suivant la revendication 3,
**caractérisé en ce que**,
les éléments ( 2 ) de convoyage sont munis sur les deux faces extérieures de rouleaux ( 6 ) qui sont maintenus dans des traverses ( 8 ) et qui roulent sur les guidages ( 3 ) dans la direction de transport.

5. Convoyeur sans fin suivant la revendication 3 et 4,
**caractérisé en ce que**,
les guidages ( 3 ) sont constitués sous la forme de tubes et les rouleaux ( 6 ) qui y roulent ont une surface ( 7 ) de roulement concave correspondant au profil du tube.

6. Convoyeur sans fin suivant l'une des revendications 1 à 5,
**caractérisé en ce que**,
pour faire fonctionner le convoyeur ( 1 ) sans fin, au moins un moteur ( 12 ) linéaire à partie ( 13 ) primaire statique est disposé en dessous de l'élément ( 2 ) de convoyeur sur le sol ou le bâti ( en 14 ) du convoyeur ( 1 ) sans fin, dont la partie ( 15 ) secondaire est fixée sur la face inférieure de l'élément ( 2 ) de convoyage.
